# EUROPEAN PATENT SPECIFICATION

(11) **EP 3 687 756 B1**
(45) Date of publication and mention of the grant of the patent: **18.02.2026**
(21) Application number: 18782802.5
(22) Date of filing: 17.09.2018
(51) Int. Cl.: B29C 44/28, B29C 59/04, B29C 44/44, B29C 44/34, B29C 44/50, B29C 43/46, B29C 48/00, B29C 48/94, C08J 9/04

(54) **POLYMERIC FOAM LAYER AND METHODS OF MAKING THE SAME**
POLYMERSCHAUMSCHICHT UND VERFAHREN ZUR HERSTELLUNG DAVON
COUCHE DE MOUSSE POLYMÈRE ET SES MÉTHODES DE FABRICATION

(30) Priority: 29.09.2017 US 201762565788 P
(43) Date of publication of application: 05.08.2020
(73) Proprietor: 3M Innovative Properties Company, Saint Paul, Minnesota 55133-3427 (US)
(72) Inventor: MEREE, Caitlin E., Saint Paul, Minnesota 55133-3427 (US); KALISH, Jeffrey P., Saint Paul, Minnesota 55133-3427 (US)
(74) Representative: Mathys & Squire
(86) International application number: PCT/IB2018/057120
(87) International publication number: WO 2019/064120

(56) References cited:
- GB-A- 1 338 291
- JP-A- 2000 233 422
- JP-A- 2002 096 374
- JP-B2- 2 962 090
- US-A- 5 650 215
- US-A1- 2003 082 362
- US-A1- 2015 030 839
- US-B1- 6 620 495

## Description

### Background

Foam products are commonly made by injection molding or by forming a large block of foam and then cutting the block into sheets. Converting processes such as convoluted cutting, hot wire, machining and contour cutting is commonly used to provide shapes on surfaces of the sheets. Such shaped surfaces typically exhibit open cells.

Another common approach to making shaped foam is to cast a foamed film onto a casting roll to create a smooth surface foamed film. To create three-dimensional features, the film can be embossed, thereby compressing sections of the film. The cells in the compressed areas are crushed, permanently damaging the cell structure.

A third approach to making shaped foam is by profile extrusion, wherein foamed polymer is extruded through a profile die having the desired contour shape cut in the die. The resulting contoured foam shape is continuous in the down web direction. Uses of such shaped foams include gasket seals.

Alternative polymeric foams and/or methods for making polymeric foams are desired.
Document US2003082362A1 discloses a foamed pressure sensitive adhesive article. The article includes a polymeric mixture containing a styrenic block copolymer and a polyarylene oxide polymer. Voids are formed in the polymeric mixture by expanding polymeric microspheres.
Document US2015030839A1 discloses a pressure sensitive adhesive foam comprising a foam comprising a non-syntactic foam blend of styrenic block copolymer and acrylic copolymer, wherein the non-syntactic foam blend is a hot melt formed foam.
Document US6620495B1 discloses a sheet-form structure of expandable thermoplastic resin and a method of manufacturing the sheet-form structure, as well as such thermoplastic resin foams. A sheet-form structure 1 of expandable thermoplastic resin including granules 2 of expandable thermoplastic resin arranged generally uniformly for integral connection thereof through a thin film 3 of expandable thermoplastic resin. A thermoplastic resin foam including a continuous, thermoplastic resin foam layer, a number of highly-expanded, thermoplastic resin portions provided on at least one surface of the continuous foam layer, and slightly-expanded, thermoplastic resin thin films for covering outer surfaces of respective highly-expanded portions.
Document US5650215A discloses a pressure-sensitive adhesive (PSA) coated articles, including tapes and transfer coatings, having microstructured surfaces and methods of making pressure-sensitive adhesive articles bearing such microstructured surfaces. The performance properties of the pressure-sensitive adhesive articles can be tailored by independently varying the microstructure and the rheological properties of the pressure-sensitive adhesive.
Document GB 1338291A discloses foamed sheet produced by extruding foamable thermoplastic resin through a die slit 1 into sliding contact with a first roller 5 having its axis parallel to the slit so that as the resin foams its expansion is restricted in a direction parallel to the slit by the frictional contact with the first roller, and passing the resulting foamed sheet 9 through the gap between the roller 5 and a second roller 7.
Document JP2000233422A discloses a decorative sheet prepared by a method wherein a molten sheet 2 of a thermoplastic resin extruded from a T-die 11 and a thermoplastic resin solid sheet 1 are inserted between an embossing and cooling roller 12 and a pressing roller 13 and the molten sheet 2 is solidified by cooling on the roller 12 to integrally bond it with the solid sheet 1 and after the transparent substrate sheet 4 with an uneven pattern 3 on the molten sheet surface is peeled off from the roller 12, a printed ink layer 5 consisting of a picture pattern and a wholly solid color layer is formed on the opposite side face to the uneven pattern of the transparent substrate sheet 4 by means of a rotary press using a plate cylinder 21 to prepare a decorative sheet S. Document JP2962090B2 discloses additive to be mixed with an olefin resin to be melted and extruded.
Document JP2002096374A discloses a molten olefin resin containing a foaming agent extruded from a die and brought into contact with an intermediate roll in the neighborhood of starting of air bubbles appearance. The foaming is finished on the intermediate roll or foaming is finished to the extent where corrugation can be prevented from being generated by a tension between the intermediate roll and a cooling roll and thickness of the sheet is made thin by this tension. Thereafter, the resin is solidified by cooling by means of an air knife device and the cooling roll and is taken off.

### Summary

The present invention is directed to a a polymeric foam layer as defined in the appended claims and a method to prepare the same as defined in the appended claims. In one aspect, the present disclosure describes a polymeric foam layer comprising a star polymer, wherein the polymeric foam layer has first and second opposed major surfaces, exhibits a thickness up to 25,700 micrometers (in some embodiments, in a range from 100 micrometers to 1000 micrometers, 1000 micrometers to 6000 micrometers, 6000 micrometers to 12,700 micrometers or even 12,700 micrometers to 25,400 micrometers) and a porosity of 10 to 70 % based on a total volume of the polymeric foam layer, and comprises a pattern of foam features extending from or into the first major surface by at least 100 micrometers.

In another aspect, the present disclosure describes a first method of making a polymeric foam layer described herein, the method comprising:
providing a rotating patterned tool roll having a major circumferential surface and an extrusion die with a die lip spaced in proximity of the tool roll to form a gap between the tool roll and the extrusion die; and
introducing a star polymer comprising a foaming agent onto a portion of the major circumferential surface of the tool roll, wherein of the portion of the major circumferential surface is in proximity of the die lip to provide the star polymeric foam layer.

In a further aspect of the method of making a polymeric foam layer described herein comprises the step wherein a gas is introduced onto a portion of the major circumferential surface of the tool roll, wherein of the portion of the major circumferential surface is in proximity of the die lip, wherein a gas is injected into the star polymer at least one of prior to or during contact of the star polymer with the portion of the major circumferential surface of the tool roll and, wherein the star polymer foams to provide the polymeric foam layer.

In a further aspect, the method of making a polymeric foam layer described herein is a method wherein
the star polymer foams to provide the polymeric foam layer.

In a further aspect, the method of making a polymeric foam layer described herein further comprises
providing a compression roll in proximity of the tool roll to form a gap between the tool roll and the compression roll;
injecting oil into a star polymer comprising at least one of a foaming agent, a gas, or polymeric microspheres in an extrusion chamber; and
extruding the star polymer into the gap between the extrusion die and the tool roll, wherein the star polymer foams to provide the polymeric foam layer.

Exemplary uses of polymeric foam layers described herein including vibration damping and polishing applications (e.g., polishing pads useful in chemical mechanical planarization (CMP)).

### Brief Description of the Drawings

FIG. 1 is an exemplary apparatus for the first method of making a polymeric foam layer described herein.
FIG. 2 is an exemplary apparatus for the second method of making a polymeric foam layer described herein.
FIG. 3 is an exemplary apparatus for the third method of making a polymeric foam layer described herein.
FIG. 4 is an exemplary apparatus for the fourth method of making a polymeric foam layer described herein.

### Detailed Description

Exemplary star polymers include styrene isoprene styrene (SIS), styrene ethylene propylene styrene (SEPS), styrene ethylene butadiene styrene (SEBS), or styrene butadiene styrene (SBS) (including mixtures thereof). Suitable star polymers are available, for example, under the trade designation "KRATON" from Kraton, Houston, TX.

In some embodiments, polymeric foam layers described herein have a glass transition temperature, T_{g}, in a range from -125°C to 150°C (in some embodiments, in a range from -125°C to - 10°C, -10°C to 80°C, 50°C to 150°C or even 50°C to 80°C). The glass transition temperature is determined as follows, using a differential scanning calorimeter (DSC) available under the trade designation "Q2000 DSC" from TA Instruments, New Castle, DE. The DSC procedure is as follows: cool sample to -180°C, temperature ramp at 10°C/min. to 300°C. The glass transition temperature is recorded as the inflection point in the heat flow versus temperature curve.

In some embodiments, polymeric foam layers described herein can be wrapped around a 1 m (in some embodiments, 75 cm, 50 cm, 25 cm, 10 cm, 5 cm, 1 cm, 5 mm, or even 1 mm) diameter rod without breaking.

In some embodiments, polymeric foam layers described herein have first and second opposed major surfaces, and comprising foam features extending from or into the first major surface by at least 100 (in some embodiments, in a range from 100 to 1000, 1000 to 6000, 6000 to 12,700 or even 12,700 to 25,400) micrometers. In some embodiments, the features comprise at least one of the following shapes: a cone, a cube, a pyramid, a continuous rail, continuous multi-directional rails, a hemisphere, a cylinder, or a multi-lobed cylinder. In some embodiments, the features have a cross-section in at least one of the following shapes: a circle, a square, a rectangle, a triangle, a pentagon, other polygon, a sinusoidal, a herringbone, or a multi-lobe.

In some embodiments, polymeric foam layers described herein have porosity therein having an average cell size (i.e., pore size) in a range from 10 to 3000 (in some embodiments, 10 to 2000, 10 to 1000, 10 to 500, or even 10 to 100) micrometers.

In some embodiments, polymeric foam layers described herein have a total porosity of at least 10, 20, 25, 30, 40, 50, 60, or even at least 70; in some embodiments, in a range from 10 to 70, 10 to 60, or even 10 to 50) percent, based on the total volume of the polymeric foam layer.

In some embodiments, polymeric foam layers described herein comprise a reinforcement material (e.g., a woven, nonwoven, fibers, a mesh, or a film).

In some embodiments, polymeric foam layers described herein comprise at least one of glass beads, glass bubbles, glass fibers, abrasive grain, carbon black, carbon fibers, diamond particles, composite particles, nanoparticles, mineral oil, tackifier, wax nanoparticles, rubber particles or flame retardant.

In some embodiments, polymeric foam layers described herein comprise a thermal conductive material (e.g., BN).

The first method of making a polymeric foam layer described herein comprises:
providing a rotating patterned tool roll having a major circumferential surface and an extrusion die with a die lip spaced in proximity of the tool roll to form a gap between the tool roll and the extrusion die; and
introducing a star polymer comprising a foaming agent onto a portion of the major circumferential surface of the tool roll, wherein of the portion of the major circumferential surface is in proximity of the die lip to provide the star polymeric foam layer.

In some embodiments of the first method, the major circumferential surface of the compression roll comprises an array of cavities. In some embodiments of the first method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and a multi-lobed cylinder. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the first method for making polymeric foam layers described herein, the foaming agent comprises at least one of an acid (e.g., citric acid), a bicarbonate, an azodicarbonamide, a modified azodicarbonamide, a hydrazide, a sodium bicarbonate and citric acid blend, a dinitrosopentamethylenetetramine, p-toluenesulfonyl hydrazide, 4-4'-oxybis hydrazide, azodicarbonamide, p-toluenesulfonyl semicarbazide, 5-phenyltetrazole, a 5-phenyltetrazole analogue, diisopropylhydrazodicarboxylate, 5-phenyl-3,6-dihydro-1,3,4-oxadiazin-2-one, or sodium borohydride.

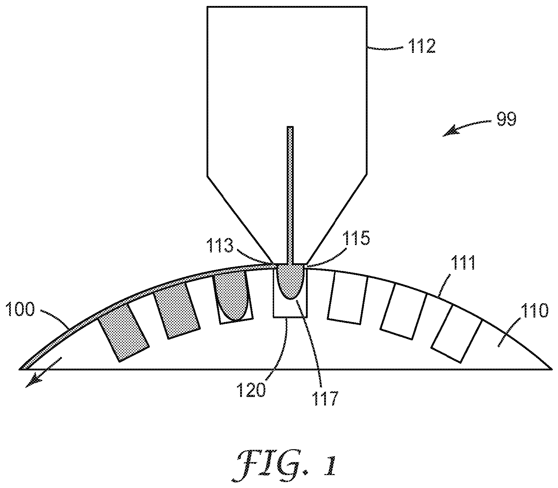

Referring to FIG.1, apparatus 99 has rotating tool roll 110 having major circumferential surface 111 and extrusion die 112 with die lip 113 spaced in proximity of tool roll 110 to form gap 115 between tool roll 110 and extrusion die 112. Star polymer 117 comprising a foaming agent is injected onto portion 120 of major circumferential surface 111 of tool roll 110. Portion 120 of major circumferential surface 111 is in proximity of die lip 113 to provide star polymeric foam layer 100.

The second method of making a polymeric foam layer described herein, the method comprising:
providing a rotating patterned tool roll having a major circumferential surface and an extrusion die with a die lip spaced in proximity of the tool roll to form a gap between the tool roll and the extrusion die; and
introducing a star polymer comprising a gas onto a portion of the major circumferential surface of the tool roll, wherein of the portion of the major circumferential surface is in proximity of the die lip, wherein a gas is injected into the star polymer at least one of prior to or during contact of the star polymer with the portion of the major circumferential surface of the tool roll and, wherein the star polymer foams to provide the polymeric foam layer.

In some embodiments of the second method for making polymeric foam layers described herein, the major circumferential surface of the tool roll comprises an array of cavities. In some embodiments of the second method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and multi-lobed cylinders. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the second method for making polymeric foam layers described herein, the gas comprises at least one of argon, carbon dioxide, nitrogen, a butane (e.g., n-butane and isobutane), a heptane (e.g., n-heptane, isoheptane, and cycloheptane), a hexane (e.g., n-hexane, neohexane, isohexane, and cyclohexane), an octane (e.g., n-octane and cyclooctane), or a pentane (e.g., n-pentane, cyclopentane, neopentane, and isopentane).

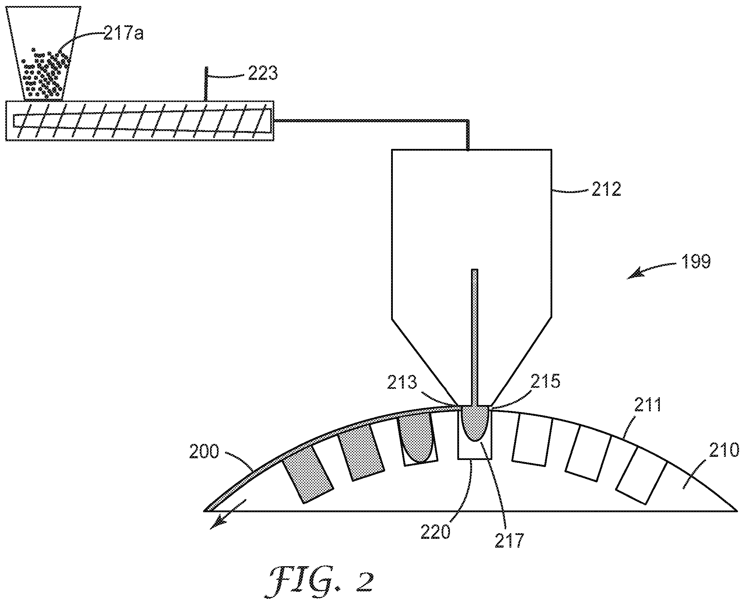

Referring to FIG. 2, apparatus 199 has rotating tool roll 210 having major circumferential surface 211 and extrusion die 212 with die lip 213 spaced in proximity of tool roll 210 to form gap 215 between tool roll 210 and extrusion die 212. Star polymer 217 comprising a gas is injected onto portion 220 of major circumferential surface 211 of tool roll 210. Portion 220 of major circumferential surface 211 is in proximity of die lip 213. Gas 223 is injected into star polymer 217a at least one of prior to or during contact of star polymer 217 with portion 220 of major circumferential surface 211 of tool roll 210. Star polymer 217 foams to provide polymeric foam layer 200.

In another aspect, the present disclosure describes a third method of making a polymeric foam layer described herein, the method comprising:
providing a rotating patterned tool roll having a major circumferential surface and an extrusion die with a die lip spaced in proximity of the tool roll to form a gap between the tool roll and the extrusion die; and
introducing a star polymer comprising polymeric microspheres onto a portion of the major circumferential surface of the tool roll, wherein the portion of the major circumferential surface is in proximity of the die lip and wherein the star polymer foams to provide the polymeric foam layer.

In some embodiments of the third method for making polymeric foam layers described herein, the major circumferential surface of the tool roll comprises an array of cavities. In some embodiments of the third method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and multi-lobed cylinders. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the third method for making polymeric foam layers described herein, the polymeric microspheres comprise expanding bubbles. Exemplary expanding bubbles are available, for example, under the trade designation "EXPANCEL" from AkzoNobel, Amsterdam, Netherlands or "DUALITE" from Chase Corporation, Westwood, MA.

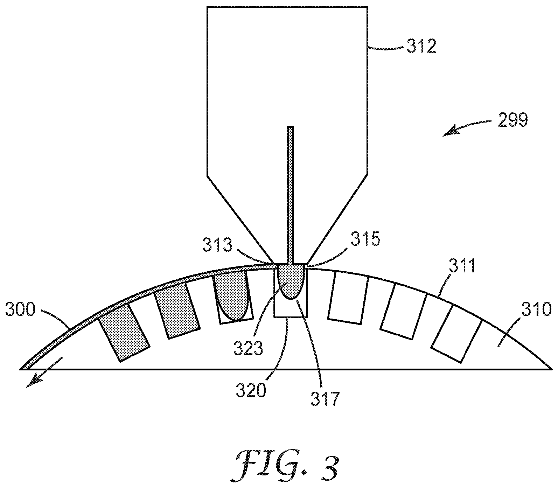

Referring to FIG. 3, apparatus 299 has rotating tool roll 310 having major circumferential surface 311 and extrusion die 312 with die lip 313 spaced in proximity of tool roll 310 to form gap 315 between tool roll and extrusion die 312. Star polymer 317 comprising polymeric microspheres onto portion 320 of major circumferential surface 311 of tool roll 310. Portion 320 of major circumferential surface 311 is in proximity of die lip 312. Star polymer 317 foams to provide polymeric foam layer 300.

The fourth method of making a polymeric foam layer described herein, the method comprising:
providing a rotating patterned tool roll having a major circumferential surface and compression roll in proximity of the tool roll to form a gap between the tool roll and the compression roll;
injecting oil into a star polymer comprising at least one of a foaming agent, a gas, or polymeric microspheres in an extrusion chamber; and
extruding the star polymer into the gap, wherein the star polymer foams to provide the polymeric foam layer.

In some embodiments of the fourth method for making polymeric foam layers described herein, the major circumferential surface of the tool roll comprises an array of cavities. In some embodiments of the fourth method, the major circumferential surface of the tool roll comprises an array of protrusions. The size and shape of the cavities or protrusions can be as desired. Exemplary shapes may include a cone, a cube, a pyramid, a continuous rail, continuous multi-directional rails, a hemisphere, a cylinder, and multi-lobed cylinders. Exemplary cross-sections may include a circle, a square, a rectangle, a triangle, a pentagon, other polygon, a sinusoidal, a herringbone, or a multi-lobe. Exemplary sizes may be heights in a range from 100 micrometers to 25,400 micrometers and widths in a range from 100 micrometers to 25,400 micrometers.

In some embodiments of the fourth method for making polymeric foam layers described herein, further comprising a compression roll having a major circumferential surface positioned near the extrusion die, downweb.

In some embodiments of the fourth method for making polymeric foam layers described herein, the oil comprises at least one of a lanolin, a liquid polyacrylate, a liquid polybutene, a mineral oil, or a phthalate.

In some embodiments of the fourth method for making polymeric foam layers described herein, the foaming agent comprises at least one of an acid, bicarbonate, an azodicarbonamide, a modified azodicarbonamide, a hydrazide, a sodium bicarbonate and citric acid blend, dinitrosopentamethylenetetramine, p-toluenesulfonyl hydrazide, 4-4'-oxybis hydrazide, azodicarbonamide, p-toluenesulfonyl semicarbazide, 5-phenyltetrazole, a 5-phenyltetrazole analogue, diisopropylhydrazodicarboxylate, 5-phenyl-3,6-dihydro-1,3,4-oxadiazin-2-one, or sodium borohydride.

In some embodiments of the fourth method for making polymeric foam layers described herein, the gas comprises at least one of argon, carbon dioxide, nitrogen, a butane (e.g., n-butane and isobutane), a heptane (e.g., n-heptane, isoheptane, and cycloheptane), a hexane (e.g., n-hexane, neohexane, isohexane, and cyclohexane), an octane (e.g., n-octane and cyclooctane), or a pentane (e.g., n-pentane, cyclopentane, neopentane, and isopentane).

In some embodiments of the fourth method for making polymeric foam layers described herein, the polymeric microspheres comprise expanding bubbles. Exemplary expanding bubbles are available, for example, under the trade designations "EXPANEL" from AkzoNobel, or "DUALITE" from Chase Corporation.

In some embodiments of the fourth method for making polymeric foam layers described herein, the oil is at a temperature greater than 80°C (in some embodiments, at least 90°C, 100°C, 125°C, 150°C, 175°C, or even, at least 200°C; in some embodiments, in a range from 80°C to 250°C, 100°C to 250°C, or even 100°C to 200°C).

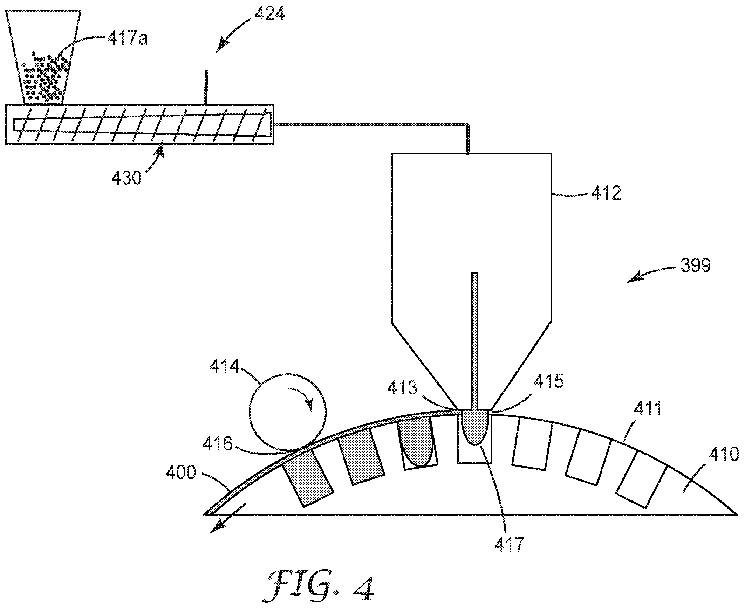

Referring to FIG. 4, apparatus 399 has rotating tool roll 410 having major circumferential surface 411, extrusion die 412 with die lip 413 spaced in proximity of tool roll 410 to form gap 415 between tool roll 410 and extrusion die 412. Compression roll 414 in proximity of tool roll 410 to form gap 416 between tool roll 410 and compression roll 414. Oil 424 is injected into star polymer 417a comprising at least one of a foaming agent, a gas, or polymeric microspheres in extrusion chamber 430. Polymer 417 is extruded into gap 415. Polymer 417 foams to provide polymeric foam layer described herein 400.

The present disclosure also described a method of providing an article, the method comprising;
providing a polymeric foam layer of any A Exemplary Embodiment;
and applying at least one of heat or pressure to permanently deform at least one protrusion of the polymeric foam layer.

The apparatus can be made of conventional materials and techniques known in the art for apparatuses of these general types.

Exemplary uses of polymeric foam layers described herein including vibration damping and polishing applications (e.g., polishing pads useful in chemical mechanical planarization (CMP)).

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Example 1

Example 1 was made using an apparatus as generally shown in FIG. 1. The extrusion die was 20.3 cm (8 inches) wide (obtained under the trade designation "MASTERFLEX" (Model LD-40) from Cloeren, Orange, TX) configured with the die positioned on the top of the tool roll at top dead center. The die was orientated such that the bottom of the die was on the trailing edge of the tooling roll. The bottom die lip had a 3.18 mm (0.125 inch) land. The extruder was a 6.35 cm (2.5 inch) single screw extruder (obtained from Davis-Standard, Pawcatuck, CT). The die temperature set points used are shown in the Table, below.

**Table**

| Heating Zones | Extruder, °C (°F) | Extrusion Die, °C (°F) |
|---|---|---|
| Zone 1 | 149 (300) | 171 (340) |
| Zone 2 | 160 (320) | 171 (340) |
| Zone 3 | 171 (340) | 171 (340) |
| Zone 4 | 171 (340) | |
| End cap | 171 (340) | |
| Neck Tube | 171 (340) | |
| Extruder RPM | 6 | |

A single tooling roll station was used with the die mounted at the top dead center of the roll. The die was mounted on linear slides to move in the up and down direction. The roll was nominally 30.5 cm (12 inch) in diameter with a 40.6 cm (16 inch) face width. The tooling roll has internal water cooling with spiral wound internal channels. A 33.6 cm (13.25 inch) outside diameter silicone tooling shell was mounted onto the outer surface of the roll.

The linear motion of the die was controlled by linear actuators to move the die and to control the gap between the die lip and tooling roll. The tooling roll had through holes drilled through the silicone shell. The straight holes were 3 mm (0.118 inch) in diameter at the surface. The holes were spaced 5 mm (0.2 inch) apart on center in both directions. The tooling roll was set with a cooling temperature set point of 15.6°C (60°F). The gap between the die lip and the tool roll surface was set at 508 micrometers (0.020 inch). The line speed was 0.53 meter (1.75 feet) per minute.

A polymer was manually premixed prior to being fed into the extruder. The polymer was a resin blend of 68 percent by weight block co-polymer elastomer (obtained under the trade designation "KRATON 1161" from Kraton, Houston, TX), 27 percent by weight block co-polymer elastomer (obtained under the trade designation "KRATON DL12340" from Kraton) and 5 percent by weight blowing agent (obtained under the trade designation "ECOCELL H" from Polyfil Corporation, Rockaway, NJ).

A polymeric foam layer was produced with protrusions extending from the surface with the protrusion spacing and height matching the tooling roll pattern.

Foreseeable modifications and alterations of this disclosure will be apparent to those skilled in the art without departing from the scope of this invention. This invention should not be restricted to the embodiments that are set forth in this application for illustrative purposes.

## Claims

1. A polymeric foam layer (100) comprising a star polymer, wherein the polymeric foam layer has first and second opposed major surfaces, exhibits a thickness up to 25,700 micrometers and a porosity of 10 to 70 % based on a total volume of the polymeric foam layer, and comprises a pattern of foam features extending from or into the first major surface by at least 100 micrometers.

2. The polymeric foam layer of claim 1, wherein the star polymer comprises at least one of styrene isoprene styrene, styrene ethylene propylene styrene, styrene ethylene butadiene styrene, or styrene butadiene styrene.

3. The polymeric foam layer of any of the preceding claims, having a glass transition temperature, T_{g}, in a range from -125°C to 150°C.

4. A method of making a polymeric foam layer (100) according to any of claims 1 to 3, the method comprising:
providing a rotating patterned tool roll (210) having a major circumferential surface (211) and an extrusion die (212) with a die lip (213) spaced in proximity of the tool roll (210) to form a gap (215) between the tool roll (210) and the extrusion die (212); and
introducing a star polymer comprising a foaming agent onto a portion of the major circumferential surface (211) of the tool roll (210), wherein the portion of the major circumferential surface (211) is in proximity of the die lip (213) to provide the star polymeric foam layer (100).

5. A method of making a polymeric foam layer, the method comprising:
providing a rotating tool roll having a major circumferential surface and an extrusion die with a die lip spaced in proximity of the tool roll to form a gap between the tool roll and the extrusion die; and
introducing a star polymer comprising a gas onto a portion of the major circumferential surface of the tool roll, wherein the portion of the major circumferential surface is in proximity of the die lip, wherein a gas is injected into the star polymer at least one of prior to or during contact of the star polymer with the portion of the major circumferential surface of the tool roll and, wherein the star polymer foams to provide the polymeric foam layer of any of claims 1 to 3.

6. The method of making a polymeric foam layer , the method comprising:
providing a rotating tool roll having a major circumferential surface and an extrusion die with a die lip spaced in proximity of the tool roll to form a gap between the tool roll and the extrusion die; and
introducing a star polymer comprising polymeric microspheres onto a portion of the major circumferential surface of the tool roll, wherein the portion of the major circumferential surface is in proximity of the die lip and to provide the polymeric foam layer of any of claims 1 to 3.

7. A method of making a polymeric foam layer, the method comprising:
providing a rotating tool roll having a major circumferential surface;
providing an extrusion die with a die lip spaced in proximity of the tool roll to form a gap between the tool roll and the extrusion die;
providing a compression roll in proximity of the tool roll to form a gap between the tool roll and the compression roll;
injecting oil into a mixture of the star polymer and at least one of a foaming agent, a gas, or polymeric microspheres in an extrusion chamber; and
extruding the mixture into the gap between the extrusion die and the tool roll, to provide the polymeric foam layer of any of claims 1 to 3.

8. The method of claim 7, further comprising a compression roll having a major circumferential surface positioned near the extrusion die, downweb.

9. The method of claim 8, wherein the major circumferential surface of the compression roll comprises an array of cavities.

10. The method of either claim 8 or 9, wherein the major circumferential surface of the compression roll comprises an array of protrusions.

## Patentansprüche

1. Eine Polymerschaumschicht (100), umfassend ein Sternpolymer, wobei die Polymerschaumschicht eine erste und eine zweite gegenüberliegende Hauptoberfläche aufweist, eine Dicke von bis zu 25.700 Mikrometer und eine Porosität von 10 bis 70 % bezogen auf ein Gesamtvolumen der Polymerschaumschicht aufzeigt und ein Muster von Schaummerkmalen umfasst, das sich von der ersten Hauptoberfläche oder in diese hinein um mindestens 100 Mikrometer erstreckt.

2. Die Polymerschaumschicht nach Anspruch 1, wobei das Sternpolymer mindestens eines von Styrol-Isopren-Styrol, Styrol-Ethylen-Propylen-Styrol, Styrol-Ethylen-Butadien-Styrol oder Styrol-Butadien-Styrol umfasst.

3. Die Polymerschaumschicht nach einem der vorstehenden Ansprüche, die eine Glasübergangstemperatur, T_{g}, in einem Bereich von -125 °C bis 150 °C aufweist.

4. Ein Verfahren zum Herstellen einer Polymerschaumschicht (100) nach einem der Ansprüche 1 bis 3, das Verfahren umfassend:
Bereitstellen einer rotierenden gemusterten Werkzeugwalze (210), die eine umlaufende Hauptoberfläche (211) und eine Extrusionsdüse (212) mit einer Düsenlippe (213) aufweist, die in der Nähe der Werkzeugwalze (210) beabstandet ist, um einen Spalt (215) zwischen der Werkzeugwalze (210) und der Extrusionsdüse (212) auszubilden; und
Einbringen eines Sternpolymers, umfassend ein Schaummittel, auf einen Abschnitt der umlaufenden Hauptoberfläche (211) der Werkzeugwalze (210), wobei der Abschnitt der umlaufenden Hauptoberfläche (211) in der Nähe der Düsenlippe (213) ist, um die Sternpolymerschaumschicht (100) bereitzustellen.

5. Ein Verfahren zum Herstellen einer Polymerschaumschicht, das Verfahren umfassend:
Bereitstellen einer rotierenden Werkzeugwalze, die eine umlaufende Hauptoberfläche und eine Extrusionsdüse mit einer Düsenlippe aufweist, die in der Nähe der Werkzeugwalze beabstandet ist, um einen Spalt zwischen der Werkzeugwalze und der Extrusionsdüse auszubilden; und
Einbringen eines Sternpolymers, umfassend ein Gas, auf einen Abschnitt der umlaufenden Hauptoberfläche der Werkzeugwalze, wobei der Abschnitt der umlaufenden Hauptoberfläche in der Nähe der Düsenlippe ist, wobei ein Gas in das Sternpolymer mindestens eines von vor oder während des Kontaktierens des Sternpolymers mit dem Abschnitt der umlaufenden Hauptoberfläche der Werkzeugwalze injiziert wird und, wobei das Sternpolymer schäumt, um die Polymerschaumschicht nach einem der Ansprüche 1 bis 3 bereitzustellen.

6. Das Verfahren zum Herstellen einer Polymerschaumschicht, das Verfahren umfassend:
Bereitstellen einer rotierenden Werkzeugwalze, die eine umlaufende Hauptoberfläche und eine Extrusionsdüse mit einer Düsenlippe aufweist, die in der Nähe der Werkzeugwalze beabstandet ist, um einen Spalt zwischen der Werkzeugwalze und der Extrusionsdüse auszubilden; und
Einbringen eines Sternpolymers, umfassend polymere Mikrokugeln, auf einen Abschnitt der umlaufenden Hauptoberfläche der Werkzeugwalze, wobei der Abschnitt der umlaufenden Hauptoberfläche in der Nähe der Düsenlippe ist, und um die Polymerschaumschicht nach einem der Ansprüche 1 bis 3 bereitzustellen.

7. Ein Verfahren zum Herstellen einer Polymerschaumschicht, das Verfahren umfassend:
Bereitstellen einer rotierenden Werkzeugwalze, die eine umlaufende Hauptoberfläche aufweist; Bereitstellen einer Extrusionsdüse mit einer Düsenlippe, die in der Nähe der Werkzeugwalze beabstandet ist, um einen Spalt zwischen der Werkzeugwalze und der Extrusionsdüse auszubilden;
Bereitstellen einer Kompressionswalze in der Nähe der Werkzeugwalze, um einen Spalt zwischen der Werkzeugwalze und der Kompressionswalze auszubilden;
Injizieren von Öl in eine Mischung aus dem Sternpolymer und mindestens einem von einem Schaummittel, einem Gas oder polymeren Mikrokugeln in einer Extrusionskammer; und
Extrudieren der Mischung in den Spalt zwischen der Extrusionsdüse und der Werkzeugwalze, um die Polymerschaumschicht nach einem der Ansprüche 1 bis 3 bereitzustellen.

8. Das Verfahren nach Anspruch 7, ferner umfassend eine Kompressionswalze mit einer umlaufenden Hauptoberfläche, die nahe der Extrusionsdüse, bahnabwärts, positioniert ist.

9. Das Verfahren nach Anspruch 8, wobei die umlaufende Hauptoberfläche der Kompressionswalze eine Anordnung von Hohlräumen umfasst.

10. Das Verfahren nach Anspruch 8 oder 9, wobei die umlaufende Hauptoberfläche der Kompressionswalze eine Anordnung von Vorsprüngen umfasst.

## Revendications

1. Couche de mousse polymère (100) comprenant un polymère en étoile, dans laquelle la couche de mousse polymère a des première et seconde surfaces principales opposées, présente une épaisseur allant jusqu'à 25 700 micromètres et une porosité de 10 à 70 % sur la base d'un volume total de la couche de mousse polymère, et comprend un motif de caractéristiques de mousse s'étendant à partir de la première surface principale ou à l'intérieur de celle-ci sur au moins 100 micromètres.

2. Couche de mousse polymère selon la revendication 1, dans laquelle le polymère en étoile comprend au moins l'un parmi styrène-isoprène-styrène, styrène-éthylène-propylène-styrène, styrène-éthylène-butadiène-styrène, ou styrène-butad iène-styrène.

3. Couche de mousse polymère selon l'une quelconque des revendications précédentes, ayant une température de transition vitreuse, T_{g}, comprise dans une plage allant de -125 °C à 150 °C.

4. Procédé de fabrication d'une couche de mousse polymère (100) selon l'une quelconque des revendications 1 à 3, le procédé comprenant :
la fourniture d'un rouleau d'outil à motifs rotatif (210) ayant une surface circonférentielle principale (211) et une filière d'extrusion (212) avec une lèvre de filière (213) espacée à proximité du rouleau d'outil (210) pour former un espace (215) entre le rouleau d'outil (210) et la filière d'extrusion (212) ; et
l'introduction d'un polymère en étoile comprenant un agent moussant sur une partie de la surface circonférentielle principale (211)du rouleau d'outil (210), dans lequel la partie de la surface circonférentielle principale (211) se trouve à proximité de la lèvre de filière (213) pour obtenir la couche de mousse polymère en étoile (100).

5. Procédé de fabrication d'une couche de mousse polymère, le procédé comprenant :
la fourniture d'un rouleau d'outil rotatif ayant une surface circonférentielle principale et une filière d'extrusion avec une lèvre de filière espacée à proximité du rouleau d'outil pour former un espace entre le rouleau d'outil et la filière d'extrusion ; et
l'introduction d'un polymère en étoile comprenant un gaz sur une partie de la surface circonférentielle principale du rouleau d'outil, dans lequel la partie de la surface circonférentielle principale se trouve à proximité de la lèvre de filière, dans lequel un gaz est injecté dans le polymère en étoile au moins avant ou pendant le contact du polymère en étoile avec la partie de la surface circonférentielle principale du rouleau d'outil et, dans lequel le polymère en étoile mousse pour obtenir la couche de mousse polymère selon l'une quelconque des revendications 1 à 3.

6. Procédé de fabrication d'une couche de mousse polymère, le procédé comprenant :
la fourniture d'un rouleau d'outil rotatif ayant une surface circonférentielle principale et une filière d'extrusion avec une lèvre de filière espacée à proximité du rouleau d'outil pour former un espace entre le rouleau d'outil et la filière d'extrusion ; et
l'introduction d'un polymère en étoile comprenant des microsphères polymères sur une partie de la surface circonférentielle principale du rouleau d'outil, dans lequel la partie de la surface circonférentielle principale se trouve à proximité de la lèvre de filière et pour obtenir la couche de mousse polymère selon l'une quelconque des revendications 1 à 3.

7. Procédé de fabrication d'une couche de mousse polymère, le procédé comprenant :
la fourniture d'un rouleau d'outil rotatif ayant une surface circonférentielle principale ;
la fourniture d'une filière d'extrusion avec une lèvre de filière espacée à proximité du rouleau d'outil pour former un espace entre le rouleau d'outil et la filière d'extrusion ;
la fourniture d'un rouleau de compression à proximité du rouleau d'outil pour former un espace entre le rouleau d'outil et le rouleau de compression ;
l'injection d'huile dans un mélange du polymère en étoile et d'au moins l'un parmi un agent moussant, un gaz, ou des microsphères polymères dans une chambre d'extrusion ; et
l'extrusion du mélange dans l'espace entre la filière d'extrusion et le rouleau d'outil, pour obtenir la couche de mousse polymère selon l'une quelconque des revendications 1 à 3.

8. Procédé selon la revendication 7, comprenant en outre un rouleau de compression ayant une surface circonférentielle principale positionnée près de la filière d'extrusion, dans le sens de production.

9. Procédé selon la revendication 8, dans lequel la surface circonférentielle principale du rouleau de compression comprend un ensemble de cavités.

10. Procédé selon la revendication 8 ou 9, dans lequel la surface circonférentielle principale du rouleau de compression comprend un ensemble de saillies.
